# EUROPEAN PATENT SPECIFICATION

(11) **EP 3 599 123 B1**
(45) Date of publication and mention of the grant of the patent: **02.06.2021**
(21) Application number: 18185908.3
(22) Date of filing: 26.07.2018
(51) Int. Cl.: B60K 35/00

(54) **DISPLAY FOR A VEHICLE INCLUDING A HOLOGRAM**
ANZEIGE, EINSCHLIESSLICH EINES HOLOGRAMS, FÜR EIN FAHRZEUG
AFFICHAGE POUR VÉHICULE COMPRENANT UN HOLOGRAMME

(43) Date of publication of application: 29.01.2020
(73) Proprietor: Visteon Global Technologies, Inc., Van Buren Township, MI 48111-5711 (US)
(72) Inventor: LEDERMANN, Alexandra, 76547 Sinzheim (DE); RAUSS, Thomas, 75323 Bad Wildbad (DE)
(74) Representative: MERH-IP Matias Erny Reichl Hoffmann Patentanwälte PartG mbB

(56) References cited:
- DE-A1- 3 735 983
- DE-A1-102014 218 435
- DE-A1-102015 201 936

## Description

### TECHNICAL FIELD

One or more embodiments herein generally describe a display for producing one or more holograms. The display may be used in a vehicle.

### BACKGROUND

A vehicle may include a display for showing visual content to an occupant. The visual content may be two-dimensional computer graphics, three-dimensional computer graphics, a digital image, such as from a camera, or a video feed, such as from a camera. The visual content may be displayed on a graphical user interface (GUI) of the display. The visual content may be an analog reading associated with an analog gauge, which may comprise part of the display.

Recently, holographic displays that utilize light diffraction to create a virtual three-dimensional image of an object have received significant attention for application in a vehicle, for example. Holographic displays are unique from other forms of 3D imaging in that they do not require the aid of any special glasses or external equipment for a viewer to see the image.

German Patent Applications No. DE 3735983 A1 and DE 102015201936 A1 each describe a holographic display device for a vehicle. Furthermore, German Patent Application No. DE 102014218435 A1 discloses an instrument cluster for a vehicle comprising a hologram.

### SUMMARY

One or more embodiments described in the present application aim in providing an improved display for a vehicle, the display being configured for showing visual content and producing a hologram, in addition to the visual content.

According to the invention, there is provided a display for a vehicle. The display is configured to show visual content and to produce a hologram, in addition to the visual content. The display includes a backlight unit, an illumination frame, and a holographic layer. The illumination frame defines an opening and is positioned in front of and encircling the backlight unit in the opening. The illumination frame includes one or more light elements positioned about a periphery of the illumination frame. The holographic layer is positioned in the opening of the illumination frame. The one or more light elements is/are configured to emit light through the holographic layer to produce the hologram.

Specifically, a vehicle may include a display configured to produce a hologram as described hereunder. The display includes may a backlight unit for showing visual content. The visual content is be in addition to the hologram. The visual content may be separate from the hologram. The display includes an illumination frame positioned in front of the backlight unit. The illumination frame includes one or more light elements. The display includes a holographic layer positioned in front of the backlight unit. The holographic layer may include a plurality of holographic layers. The one or more light elements are configured to emit light through the holographic layer to produce the hologram.

### BRIEF DESCRIPTION OF THE DRAWINGS

FIG. 1 illustrates an exploded, perspective view of a display, which is in accordance with one or more embodiments.
FIGS. 2A and 2B illustrate schematic views of a display, which is in accordance with one or more embodiments.
FIG. 3 illustrates a schematic view of a display, which is in accordance with one or more embodiments.
FIG. 4 illustrates a schematic view of a display, which is in accordance with one or more embodiments.
FIG. 5 illustrates a schematic view of a display, which is in accordance with one or more embodiments.
FIGS. 6A and 6B illustrate schematic views of a display, which is in accordance with one or more embodiments.
FIG. 7 illustrates a schematic view of a display, which is in accordance with one or more embodiments.
FIG. 8 illustrates a schematic view of a display, which is in accordance with one or more embodiments.
FIGS. 9A and 9B illustrate schematic views of a display, which are in accordance with one or more embodiments.
FIG. 10 illustrates a method for producing a hologram, which is in accordance with one or more embodiments.
FIG. 11 illustrates a method for producing a first hologram and a second hologram, which is in accordance with one or more embodiments.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

One or more embodiments of the present invention generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation desired. It is recognized that any circuit or other electrical device disclosed herein may include any number of microcontrollers, processors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform any operation(s) disclosed herein. In addition, any one or more of the electrical devices may be configured to execute a computer-program that is embodied in a non-transitory computer readable medium that is programmed to perform any number of the functions as disclosed.

One or more embodiments include a display for producing one or more holograms. The display may include one or more holographic layers for producing the one or more holograms. The display may include one or more light elements for emitting light through the one or more holographic layers. A light element may emit a single wave length or color, multiple wave lengthes or colors at once, or switch from emitting a first wave length or color to emitting a second wave length or color. A light element may be a light-emitting diode (LED), a laser, a tungsten lamp, or another illumination source. A light element may operate over a narrow-band light spectrum or a broad-band light spectrum. A light element may operate over a continuous band of a light spectrum or may operate over discontinuous light spectrums. Similarly, the display may operate over a narrow-band light spectrum, a broad-band light spectrum, a continuous band of a light spectrum, or discontinuous light spectrums. The one or more light elements may be collimated or non-collimated. The one or more light elements may be coherent, incoherent, or partially coherent. The display may selectively activate one or more of the one or more light elements. Similarly, the display may selectively deactivate one or more of the one or more light elements.

The display may include an onboard controller for activating one or more light elements. Similarly, the onboard controller may deactivate one or more light elements. The onboard controller may thus selectively activate or deactivate one or more of the light elements. The onboard controller may control additional functionality associated with the display. For example, the controller may cause one or more of the light elements to switch from emitting light in a first color to a second color. As an alternative, the display may be electrically connected to an external controller (i.e., offboard controller), for controlling functionality associated with the display, such as with the one or more light elements.

One or more embodiments include a display with a holographic layer for producing a hologram. The hologram may be a transmissive hologram or a reflective hologram. The holographic layer may store a recorded scene. The recorded scene may be a photographic recording of a scene. The photographic recording may record a light field associated with the scene. In doing so, the recorded scene may record onto the holographic layer an interference pattern associated with the light field and the scene. After recording, the scene may not be needed. The holographic layer may store the recorded scene as an individual, static, pre-rendered three-dimensional recorded scene. The scene may be reproduced as the hologram through the recorded scene stored on the holographic layer. One or more light elements may emit light through the holographic layer in order to produce the hologram. The interference pattern may cause the emitted light to produce the hologram. To a user of the display, the hologram may appear to be three-dimensional and distinct from the display. The user may perceive the hologram to be a three-dimensional representation of the scene that is distinct from the display. The user may perceive the hologram to take-up a spatial volume outside of the display.

One or more embodiments may include a display for producing a first hologram. To produce the first hologram, the display may include a first holographic layer. The first holographic layer may include a first interference pattern. The display may include one or more light elements for emitting light through the first holographic layer. The first interference pattern may cause emitted light to produce the first hologram. The display may produce a second hologram. To produce the second hologram, the display may include a second interference pattern on the first holographic layer. The second interference pattern may cause emitted light to produce the second hologram. The display may selectively activate a first set of the one or more light elements to produce the first hologram. The display may selectively activate a second set of the one or more light elements to produce the second hologram. The display may simultaneously produce the first hologram and the second hologram. As an alternative, the display may produce the first hologram by itself, such that the second hologram is not produced. As another alternative, the display may produce the second hologram by itself, such that the first hologram is not produced. As another alternative, the display may sequentially produce the first hologram and the second hologram to provide an animation effect, such as movement.

One or more embodiments may include a display with at least a first holographic layer and a second holographic layer. The display may produce a first hologram through the first holographic layer. The display may produce a second hologram through the second holographic layer. The display may include a first set of one or more light elements for emitting light through the first holographic layer. The display may include a second set of one or more light elements for emitting light through the second holographic layer. The first holographic layer may include an interference pattern for producing the first hologram. The interference pattern of the first holographic layer may cause emitted light from the first set of the one or more light elements to produce the first hologram. The second holographic layer may include an interference pattern for producing the second hologram. The interference pattern of the second holographic layer may cause emitted light from the second set of the one or more light elements to produce the second hologram. The display may simultaneously produce the first hologram and the second hologram. As an alternative, the display may produce the first hologram by itself, such that the second hologram is not produced. As another alternative, the display may produce the second hologram by itself, such that the first hologram is not produced. As another alternative, the display may sequentially produce the first hologram and the second hologram to provide an animation effect, such as movement.

One or more embodiments may include a display in a vehicle. The display may produce a hologram. The hologram may be produced from an interference pattern on a holographic layer. In addition to the hologram, the display may show visual content. As such, the display may produce the hologram and also show non-holographic visual content.

As one example, visual content (i.e., non-holographic visual content) may include two-dimensional computer graphics or three-dimensional computer graphics. This may be through a graphical user interface (GUI). The display may include a processor, such as a graphic processing unit (GPU), for producing the GUI and visual content, such as two-dimensional computer graphics or three-dimensional computer graphics, thereon. A backlight unit may include the GUI. As such, the display may include the holographic layer for producing the hologram and the GUI for showing visual content.

As one example, the GUI may serve as a digital instrument cluster. As such, the GUI may show one or more graphical gauges, such as a graphical speedometer, a graphical tachometer, a graphical odometer, a graphical fuel gauge, another graphical gauge, or a combination thereof. The display may produce the hologram to emphasize a graphical gauge of the digital instrument cluster or a reading thereon. The hologram may visually alert a user of the display of a condition associated with the graphical gauge. The condition may be associated with a favorable reading or an unfavorable reading from the graphical gauge.

For example, on the GUI, in the event a graphical fuel gauge has a low reading for fuel amount, the hologram may serve as a telltale. The telltale may alert a user of the low fuel condition. Alternatively, the hologram may provide an illumination effect to emphasize the graphical fuel gauge, which may thus alert a user of the low fuel condition. As one example, the illumination effect may cause the hologram to change colors, such as from green to yellow to red. Green may be associated with a full-tank of fuel or a full-charge. Red may be associated with a low amount of fuel remaining or a nearly depleted charge. Yellow may be associated with an amount between red and green, such as a half-of-a-tank of fuel remaining or half of a full-charge remaining. As another example, the hologram may serve as other telltales, which may monitor a system that is independent of the digital instrument cluster. For example, the hologram may alert a user that a parking brake is engaged. As another example, the GUI may serve as part of an infotainment system. For example, the GUI may serve as a navigation interface of the infotainment system or a multimedia interface of the infotainment system. The display may produce the hologram to emphasize an interface or content on the GUI of the infotainment system. As another example, the display may be part of an advanced driver assistance system ("ADAS") or an autonomous vehicle system. For example, the display may work with a backup camera system for generating video and detecting and monitoring an object in relation to a rear of the vehicle. The display may show the video feed. In response to detecting an object, the display may produce the hologram to alert the user of the object.

As one example, the display may include an analog gauge for showing an analog reading on the analog gauge. The analog gauge may be an analog speedometer, an analog tachometer, an analog odometer, an analog fuel gauge, or another analog gauge. The analog reading may be visual content. The analog gauge may be part of an analog instrument cluster. The analog instrument cluster may include additional analog gauges, beyond the analog gauge.

As one example, the analog gauge may include an applique. The analog gauge may include indicia printed on the applique. The analog gauge may include a backlight unit for illuminating the applique. In doing so, the backlight unit may illuminate indicia on the applique. The analog gauge may be driven by a power source, such as a stepper motor. The analog gauge may include a mechanical pointer. In response to the power source, the mechanical pointer may move from a first position to a second position. For example, the power source may cause the mechanical pointer to rotate about a fixed axis from a first position to a second position. As another example, the power source may cause the mechanical pointer to slide along an axis from a first position to a second position. The power source may drive the mechanical pointer to produce an analog reading that corresponds to an event associated with the vehicle and the relevant indicia on the analog gauge. For example, in the event the vehicle accelerates from 10MPH (miles-per-hour) to 40MPH, an analog speedometer may, via a power source, cause a mechanical pointer to rotate from pointing at a first indicia indicating 10MPH to a second indicia indicating 40MPH. In addition to the analog gauge, the display may include a holographic layer for producing a hologram. The holographic layer may be placed in front of the mechanical pointer, the applique, and the backlight. As such, the holographic layer may be placed over the analog gauge. Similar to the GUI examples, the hologram may serve as a telltale, such as to emphasize an analog reading of the analog gauge, or may serve as an illumination effect, such as to emphasize the analog gauge. This may alert a user of the analog reading on the analog gauge or may alert the user to look at the analog gauge. Thus, the display may include the holographic layer for producing the hologram and the analog gauge for showing visual content.

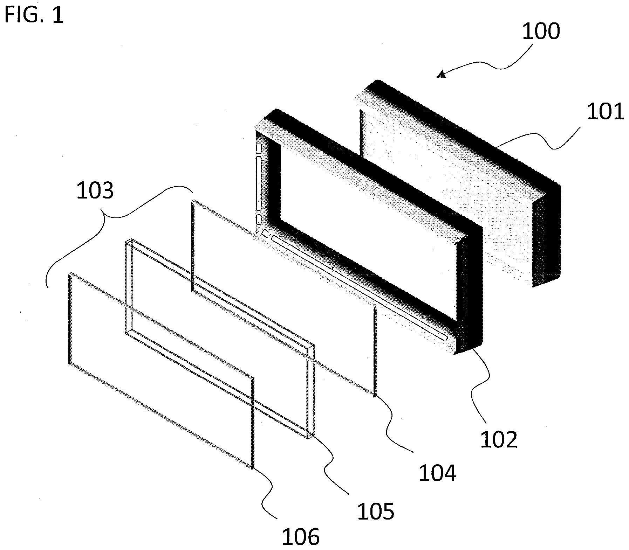

In accordance with one or more embodiments herein, FIG. 1 illustrates an exploded, perspective view of a display 100 for producing a hologram. The display 100 includes a backlight unit 101 for emitting light. The backlight unit 101 may include a thin-film-transistor display. The backlight 101 unit may show visual content. The visual content may be non-holographic visual content. For example, the backlight may show a two-dimensional computer graphic, a three-dimensional computer graphic, may show a digital picture from a camera, or may show video from a video feed from a camera. The backlight unit 101 may include a front-face. As an example, the backlight unit 101 may generally emit light perpendicularly to the front face.

The display 100 includes an illumination frame 102 positioned in front of the backlight unit 101. The illumination frame may include a front-side and a backside. The front-side may be opposite the backside. The backside of the illumination frame 102 may receive the backlight unit 101. As an example, the illumination frame 102 may define an opening. The illumination frame 102 may encircle the backlight unit 101 in the opening. As such, the backlight unit 101 may emit light out of the front face through the opening of the illumination frame 102.

The illumination frame 102 includes one or more light elements for emitting light, such as a LED or a laser. The one or more light elements are positioned about a periphery of the illumination frame 102. The illumination frame 102 may include one or more light guides for directing light emitted from one or more of the one or more light elements. As an example, the illumination device may emit light away from the front face of the backlight unit 101. The illumination device may do so at a non-zero angle to the light emitted from the backlight unit 101. As an example, the illumination frame 102 may emit light generally inwardly to the illumination frame 102 and outwardly from the front face of the backlight unit 101. As another example, the illumination frame 102 may emit light inwardly to the illumination frame 102 and toward the backside of the illumination frame 102. This may be toward the backlight unit 101.

The display 100 includes one or more layers 103 positioned in front of the front face of the backlight unit 101. The one or more layers 103 may be received by the illumination frame 102. The front-side of the illumination frame 102 may receive the one or more layers 103. The one or more layers 103 may be positioned in the opening of the illumination frame 102. Light emitted by the illumination frame 102 may pass through the one or more layers 103. Light emitted by the backlight unit 101 may pass through the one or more layers 103.

The one or more layers 103 include a holographic layer 104. The one or more layers 103 may include one or more additional holographic layers beyond the holographic layer 104. The holographic layer 104 may be in contact with an intermediate layer 105. The intermediate layer may be positioned between the holographic layer 104 and a cover layer 106. The intermediate layer 106 may be an adhesive layer for bonding the holographic layer 104 to the cover layer 106. The intermediate layer 105 may be a touch-sensitive layer for detecting a touch, such as by a user's finger or a stylus. The cover layer 106 may be a glass cover layer.

To produce the hologram, the illumination frame 102 emits light through the holographic layer 104. The holographic layer 104 may include an interference pattern. The interference pattern may cause the emitted light from the illumination frame 102 to produce the hologram. One or more of the one or more light elements of the illumination frame 102 may be positioned behind the holographic layer 104. As another example, one or more of the one or more light elements may be positioned in front of the holographic layer 104. Emitted light from the one or more light elements positioned in front of the holographic layer 104 may be directed inwardly to the illumination frame 102 and toward the backside of the illumination frame 102, which may be toward to the backlight unit 101. As another example, one or more of the one or more light elements may be positioned on a plane that includes the holographic layer 104. The plane may be parallel with a front face of the backlight unit. The plane may be perpendicular to a direction of light emitted from the front face of the backlight unit 101. The plane may be parallel with the backside of the illumination frame 102. The plane may be parallel with the front-side of the illumination frame 102. One or more of the one or more light elements may directly emit light to the holographic layer 104. As another example, one or more of the one or more light elements may indirectly emit light to the holographic layer 104, such as via the one or more light guides in the illumination frame 102. The display 100 may include one or more lenses, mirrors, filters, diffractive optical elements, or other optical elements to manipulate light from the one or more light elements. The manipulation may influence position of the hologram.

In addition to the hologram, the display 100 shows visual content. This may be through the backlight unit 101. The hologram may be produced to emphasize an aspect of the visual content shown on the backlight unit 101. Alternatively, the hologram may be produced for a reason independent of the visual content shown on the backlight unit 101.

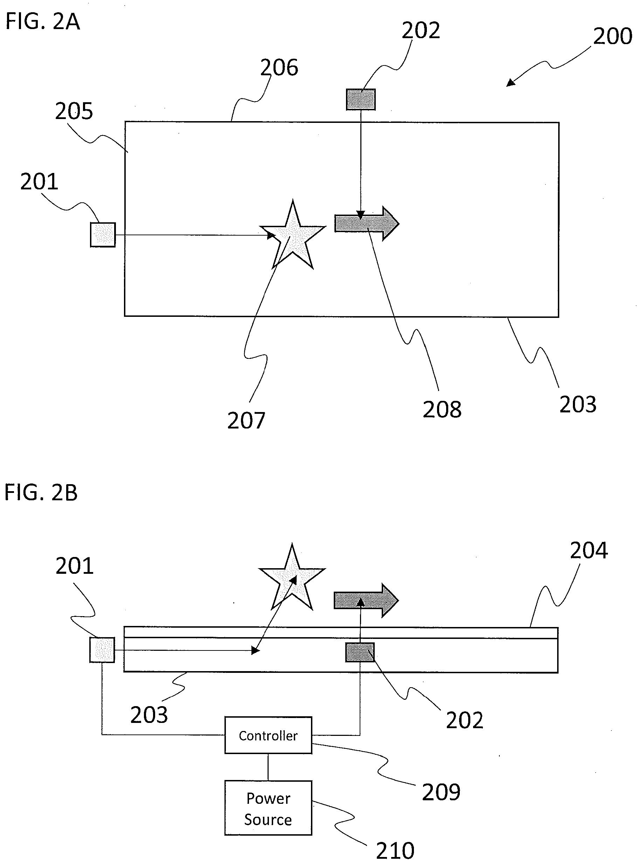

In accordance with one or more embodiments herein, FIGS. 2A and 2B illustrate a display 200. FIGS. 2A and 2B depict schematic views of the display 200. FIG. 2A is from a front-view. FIG. 2B is from a top-view. The display 200 includes a first light element 201 and a second light element 202. The display 200 includes a light guide 203. The first light element 201, the second light element 202, and the light guide 203 may be part of an illumination frame. The display 200 includes a holographic layer 204. The holographic layer 204 may be positioned in front of the light guide 203.

The first light element 201 may be positioned adjacent to a first edge 205 of the light guide 203. The second light element 202 may be positioned adjacent to a second edge 206 of the light guide 203. The first edge 205 may be perpendicular to the second edge 206.

The first light element 201 may emit light in a first direction to the light guide 203. The light guide 203 may cause the light from the first light element 201 to change from the first direction to a second direction. The first direction may be parallel to the holographic layer 204. The second direction may be toward the holographic layer 204. The light guide 203 may thus direct the light emitted from the first light element to pass through the holographic layer 204. This may cause the display 200 to produce a first hologram 207.

Similarly, the second light element 202 may emit light in a first direction to the light guide 203. The light guide 203 may cause the light from the second light element 202 to change from the first direction to a second direction. The first direction of the light from the second light element 202 may be parallel to the holographic layer 204. The first direction of the second light element 202 may intersect with the first direction of the first light element 201. The second direction of the light from the second light element may be toward the holographic layer 204. The light guide 203 may thus direct the light emitted from the second light element 202 to pass through the holographic layer 204. This may cause the display 200 to produce a second hologram 208. The first hologram 207 and the second hologram 208 may be displayed simultaneously. As an alternative, the first hologram may be displayed by itself, such that the second hologram is not produced.

As shown in FIG. 2B, the display 200 may be electrically connected to a controller 209. The display 200 may include the controller 209. The controller 209 may be electrically connected to a power source 210. The power source 210 may be an AC power source or a DC power source. The power source 210 may be part of a wiring harness of a vehicle and include a DC battery of the vehicle. The controller 209, via the power source 210, may activate the first light element 201, the second light element 202, or both. Similarly, the controller 209 may deactivate or otherwise not power the first light element 201, the second light element 202, or both. The controller 209 may thus selectively activate or deactivate the first light element 201 and the second light element 202. To emit light from the first light element 201, the controller 209, via the power source 210, may power the first light element 201. This may activate the first light element 201, which may cause the first light element 201 to emit light. Similarly, to emit light from the second light element 202, the controller 209, via the power source 210, may power the second light element 202. This may activate the second light element 202, which may cause the second light element 202 to emit light. Similarly, the controller 209 may refrain from or stop powering the first light element 201, the second light element 202, or both.

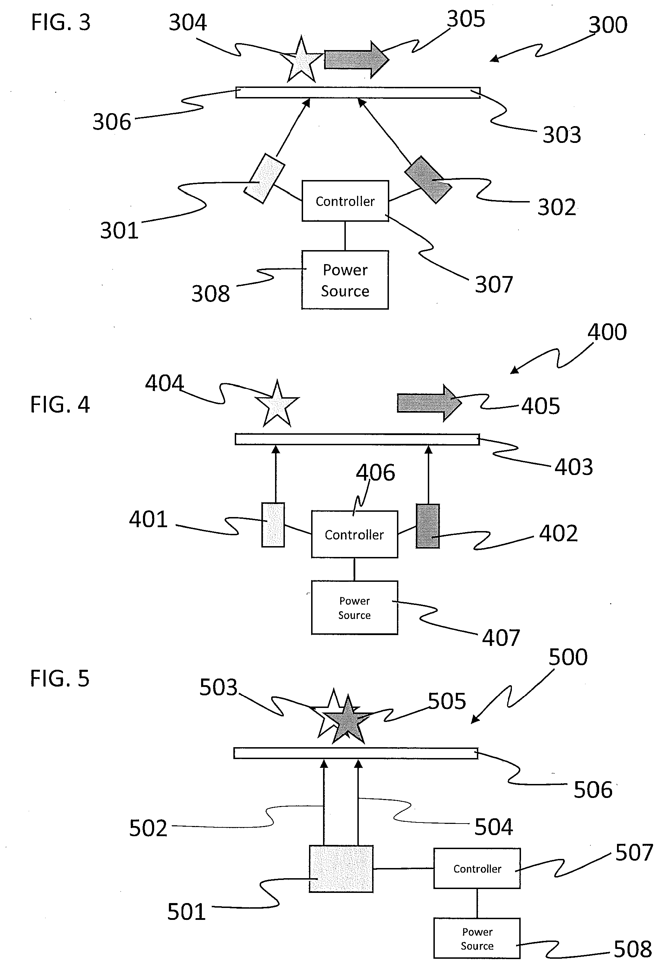

In accordance with one or more embodiments herein, FIG. 3 illustrates a display 300. FIG. 3 depicts a schematic view of the display 300. FIG. 3 is from a top-view. The display 300 includes a first light element 301 and a second light element 302. The display 300 includes a holographic layer 303. The first light element 301 may be positioned at a first angle to the holographic layer 303. The first light element 301 may emit light in a first direction. Because of the first angle, the first direction may not be perpendicular to the holographic layer 303. Thus, light from the first light element 301 may pass through the holographic layer 303 at a non-perpendicular angle. This may cause the display 300 to produce a first hologram 304.

Similarly, the second light element 302 may be positioned at a second angle to the holographic layer 303. The second light element 302 may emit light in a second direction. Because of the second angle, the second direction may not be perpendicular to the holographic layer 303. Thus, light from the second light element 302 may pass through the holographic layer 303 at a non-perpendicular angle. This may cause the display 300 to produce a second hologram 305.

The first angle of the first light element 301 may be different from the second angle of the second light element 302. As an alternative, the first angle and the second angle may be equal. The first light element 301 and the second light element 302 may be separated by a distance. The distance may be a lateral distance. As an example, the first light element 301 and the second light element 302 may be positioned on a plane. The lateral distance may be a line on the plane. The lateral distance may not intersect the plane. Thus the lateral distance may have an angle of 0deg in relation to the plane. The first light element 301 and the second light element 302 may be positioned to emit light inwardly. As an example, the first light element 301 may emit light in the first direction, which may be away from a first edge 306 of the holographic layer 303. The first angle and the second angle may allow the display 300 to position the first hologram and the second hologram at desired locations. As an example, this may be to achieve an animation effect, such as a smooth transition from the first hologram to the second hologram.

The display 300 may include a controller 307. The controller 307 may be electrically connected to a power source 308. The controller 307 may be electrically connected to the first light element 301 and the second light element 302. The controller 307 may control whether to power, via the power source 308, the first light element 301, the second light element 302, or both.

In accordance with one or more embodiments herein, FIG. 4 illustrates a display 400. FIG. 4 depicts schematic view of the display 400. FIG. 4 is from a top-view. The display 400 includes a first light element 401 and a second light element 402. The first light element 401 and the second light element 402 are positioned perpendicular to a holographic layer 403. As such, the first light element 401 may emit light in a first direction. The first direction may be perpendicular to the holographic layer 403. The light from the first light element 401 may pass through the holographic layer 403, which may cause the display 400 to produce a first hologram 404. Similarly, the second light element 402 may emit light in a second direction. The second direction may be perpendicular to the holographic layer 403. The light from the second light element 402 may pass through the holographic layer, which may cause the display 400 to produce a second hologram 405. This may allow the display 400 to position the first and the second hologram at desired locations. As an example, this may be when the first hologram and the second hologram are discrete from one another. For example, the first hologram may be attributable to a first gauge, such as a speedometer, and the second hologram may be attributable to a second gauge, such as a fuel gauge.

The display 400 may include a controller 406. The controller 406 may be electrically connected to a power source 407. The controller 406 may be electrically connected to the first light element 401 and the second light element 402. The controller 406 may control whether to power, via the power source 407, the first light element 401, the second light element 402, or both.

In accordance with one or more embodiments herein, FIG. 5 illustrates a display 500. FIG. 5 depicts schematic view of the display 500. FIG. 5 is from a top-view. The display 500 includes a light element 501. The light element 501 may emit a first light 502. This may cause the display 500 to produce a first hologram 503. The light element 501 may emit a second light 504. This may cause the display 500 to produce a second hologram 505. The first light 502 may be at first wavelength, and the second light 504 may be at a second wavelength. This may cause the first hologram 504 to be at a color different than the second hologram 505. The shape of the first hologram 503 and the shape of the second hologram 505 may be the same. The second hologram 505 may be positioned at a different location than the first hologram 503. To produce the first hologram 503, the light element 501 emits the first light 502 through a holographic layer 506. To produce the second hologram 505, the light element 501 emits the second light 504 through the holographic layer 506.

The display 500 may include a controller 507. The controller 507 may be electrically connected to a power source 508. The controller 507 may be electrically connected to the light element 501. The controller 507 may control whether to power, via the power source 508, the light element 501.

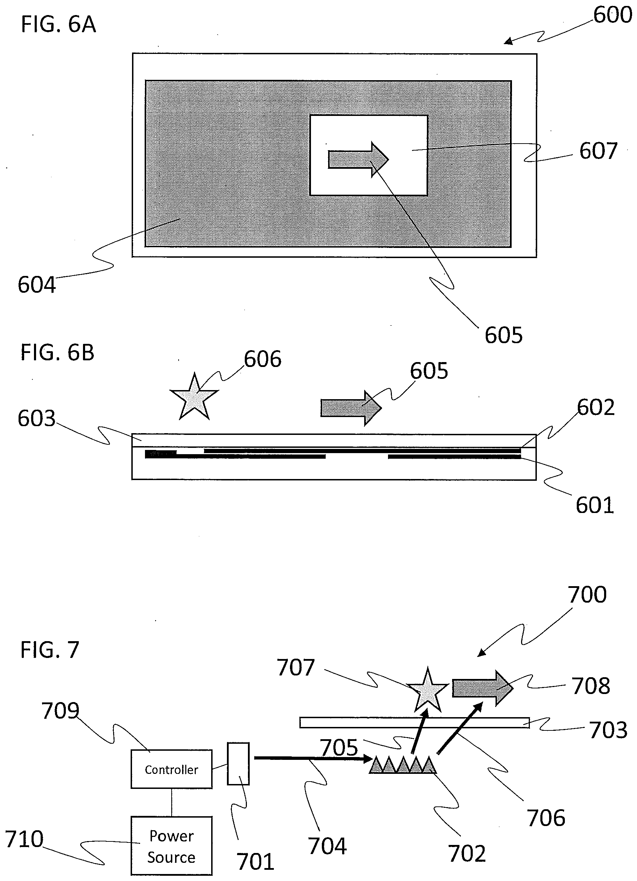

In accordance with one or more embodiments herein, FIGS. 6A and 6B illustrate a display 600. FIGS. 6A and 6B depict schematic views of the display 600. FIG. 6A is from a front-view. FIG. 6B is from a top-view. The display 600 includes a first layer 601 and a second layer 602. The first layer 601 and the second layer 602 may be positioned behind a holographic layer 603. The first layer 601 may emit a first visual content 604. The first layer 601 may cause the display 600 to produce a first hologram 605. The second layer 602 may emit a second visual content 607. The second layer 602 may cause the display 600 to produce a second hologram 606.

In FIG. 6B, both the first hologram 605 and the second hologram 606 are produced. In FIG. 6A, however, only the first hologram 605 is produced. In FIG. 6A, the first layer 601 may be activated, whereas the second layer 602 may be deactivated. This may be done by supplying power to the first layer 601, but not the second layer 602. This may be done by supplying power to one or more light elements for the first hologram 605. The first layer 601 may mask the second layer 602. In doing so, the first layer 601 may cause the display 600 to produce the first hologram 605, not the second hologram 606. Similarly, for the display 600 to produce the second hologram 606, not the first hologram 605, the display 600 may activate the second layer 602 and deactivate the first layer 601. This may be done by supplying power to the second layer 602, but not the first layer 601. This may be done by supplying power to one or more light elements for the second hologram 606.

As an alternative, the display 600 may emit the first visual content 604 and the second 607 visual content, which may be done simultaneously by activating both the first layer 601 and the second layer 602. This may be by supplying power to both the first layer 601 and the second layer 602. Through activating both the first layer 601 and the second layer 602, the display may produce the first hologram 605, the second hologram 606, or both.

As another alternative, the display 600 may directly show two different visual contents and may activate hologram 605, hologram 606, or both. For example, the display 600 may show the first visual content 604 and the second visual content 607. Depending on the visual content(s), the display 600 may produce first hologram 605, the second hologram 606, or both. For example, showing the first visual content 604 may cause the display to produce the first hologram 605, the second hologram 606, or both. Showing the second visual content 607 may cause the display to produce the first hologram 605, the second hologram 606, or both. Showing both the first visual content 604 and the second visual content 607 may cause the display 600 to produce the first hologram 605, the second hologram 606, or both.

In accordance with one or more embodiments herein, FIG. 7 illustrates a display 700. FIG. 7 depicts schematic view of the display 700. FIG. 7 is from a top-view. The display 700 includes a light element 701. The display 700 includes an optical element 702. The display 700 may include a holographic layer 703. The light element 701 may emit light in a first direction 704. The first direction 704 may be parallel to the holographic layer 703. The first direction may be toward the optical element 702. The light element 701 may emit light in a first bandwidth. The light element 701 may emit light in a second bandwidth. The light element 701 may switch from the first bandwidth to the second bandwidth. The light emitted may include the first bandwidth and the second bandwidth. The light element 701 may emit the first bandwidth and the second bandwidth in the first direction. The optical element 702 may split the first bandwidth from the second bandwidth. In doing so, the optical element 702 may direct the first bandwidth in a second direction 705 and the second bandwidth in a third direction 706. The second direction 705 and the third direction 706 may pass through the holographic layer 703. This may cause the display 700 to produce a first hologram 707 and a second hologram 708. The first hologram 707 may be associated with the first bandwidth, and the second hologram 708 may be associated with the second bandwidth. The first bandwidth may be associated with a first color of light, and the second bandwidth may be associated with a second color of light. The optical element 702 may be a Bragg grating or a prism with dispersion.

The display 700 may include a controller 709. The controller 709 may be electrically connected to a power source 710. The controller 709 may be electrically connected to the light element 701. The controller 709 may control whether to power, via the power source 710, the light element 701.

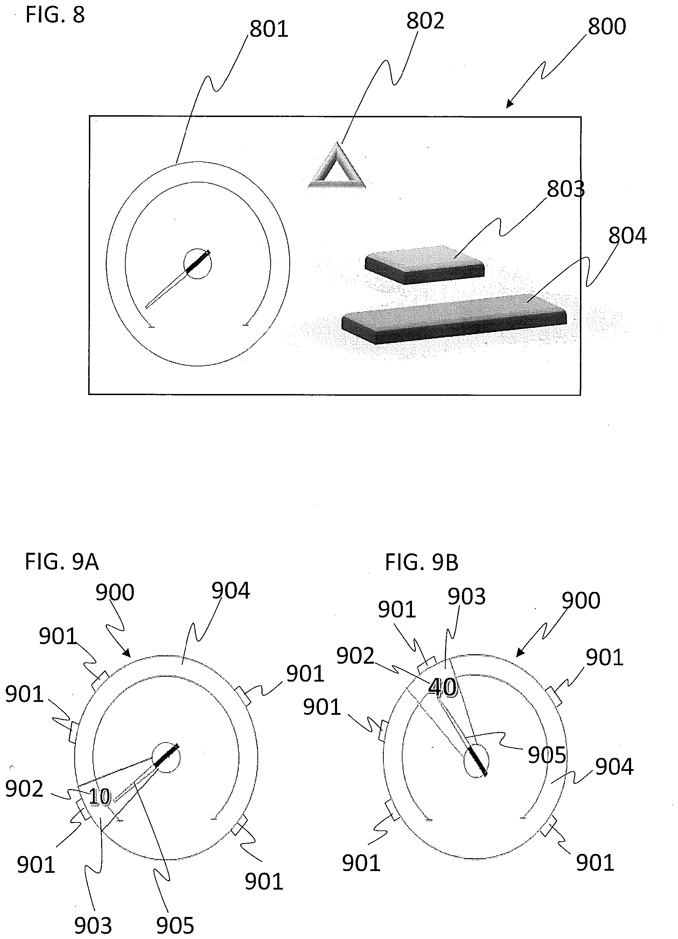

In accordance with one or more embodiments herein, FIG. 8 illustrates a display 800. FIG. 8 illustrates a schematic view the display 800. FIG. 8 is from a front-view. The display 800 may be an instrument cluster in a vehicle. The display 800 includes a graphical gauge 801. The display 800 produces a first hologram 802. The first hologram 802 may produce a warning symbol, such as to warn an occupant in the vehicle of a certain condition. The first hologram 802 may be accompanied with a message, which may be an audible message, such as through a sound system of the vehicle, or visual content, such as through a GUI associated with the display 800. The display 800 may produce the first hologram 802 in response to a signal from a system onboard the vehicle, such as a fault detected in an ADAS, autonomous vehicle system, a power-train system, or a drive-train system. The first hologram 802 may indicate that the system is inoperable, operating at a reduced performance, or detected a condition, such as detected an object, received a reading within a critical range, or received a reading outside of a critical range. Similarly, the first hologram 802 may be associated with the graphical gauge 801. The first hologram 802 may indicate that the graphical gauge 801 is inoperable, operating at a reduced performance, or detected a condition.

The display 800 may produce a second hologram 803. The second hologram 803 may be associated with a system onboard the vehicle, such as a fault detected in an ADAS, autonomous vehicle system, a power-train system, or a drive-train system. As an example, the display 800 may receive a signal from an autonomous cruise control (ACC) system that indicates a first distance between the vehicle and a preceding vehicle. Based on the first distance, the display 800 may produce the second hologram 803. The display 800 may produce a third hologram 804. The third hologram 804 may be produced in place of the second hologram 803. Alternatively, the third hologram 804 may be produced simultaneously or sequentially with the second hologram 803. Taking the ACC example, the ACC system may determine a decrease in distance between the vehicle and the preceding vehicle. In doing so, the ACC system may determine that the distance between the two vehicles is now a second distance. The second distance may be less than the first distance. In response to this, the ACC may issue a signal to the display 800, which causes the display 800 to produce the third hologram 804 in place of the second hologram 803. The third hologram 804 may be larger in size than the second hologram 803. Additionally, the third hologram 804 may be a different color than the second hologram 803, such as red versus green. The second hologram 803 and the third hologram 804 may be associated with the first hologram 802. Additionally, the second hologram 803 and the third hologram 804 may be associated with the graphical gauge 801.

In accordance with one or more embodiments herein, FIGS. 9A and 9B illustrate a display 900. FIGS. 9A and 9B illustrate schematic views of the display 900. FIGS. 9A and 9B are front-views. The display 900 may include a gauge for a vehicle. The gauge may be a graphical gauge or an analog gauge. The display 900 may include one or more light elements 901. The one or more light elements 901 may be distributed around a periphery of the display 900. The one or more light elements 901 may be selectively activated. As an alternative, the one or more light elements 901 may be simultaneously activated. The one or more light elements 901 may be evenly distributed around the periphery. As an alternative, the one or more light elements 901 may be distributed unevenly. The one or more light elements 901 may cause the display 900 to produce one or more holograms 902. As an example, when all of the one or more light elements 901 are activated, the display 900 may produce an illumination effect, such as a glowing effect, around the periphery of the display 900. The display 900 may use the illumination effect with the gauge. The display 900, through the illumination effect, may provide a color-based alert to an occupant in a vehicle. For example, the display 900 may use a first color, such as green, as part of the illumination effect, for indicating that the display 900 is operable and readings thereon are within a normal range. As such, the first color may appear to glow, via the glowing effect of the illumination effect. Additionally, the display 900 may use a second color, such as red, as part of the illumination effect, for indicating that the display 900 is inoperable, under-performing, or a reading is outside a normal range. As such, the second color may appear to glow, via the glowing effect of the illumination effect. The color-based alert may readily alert a user of a condition of the display 900. As such, through the color-based alert, the user may readily perceive the condition of the display 900. This may be because of the enhanced feedback to the user through the color-based alert.

In FIG. 9A, the display 900 may highlight a segmented region 903. The region outside of the segmented region, i.e., the surrounding region 904 may be blacked out, grayed out, or otherwise visually obstructed. This may be done via the one or more light elements 901, the gauge, or a combination thereof. For example, a controller may selectively activate or deactivate one or more of the one or more light elements to cause the segmented region 903 and the surrounding region 904. The segmented region 903 may include a greater luminance than the surrounding region 904. The boundaries of the segmented region 903 may be enhanced with or be one or more hologram 902. Additionally, indicia in the segmented region 903 may be enhanced with or be one or more hologram 902. The segmented region 903 may be a predetermined size. On the display 900, in the predetermined size, an area of the segmented region 903 may be constant. On the display 900, in the predetermined size, a perimeter of the segmented region 903 may be constant. On the display 900, in the predetermined size, a proportion of the area of the segmented region 903 to the area of the surrounding region 904 may be constant. On the display 900, in the predetermined size, the segmented region 903 may have a constant shape. Alternatively, the segmented region 903 may dynamically vary in size. This may be in response to a condition of the display 900, such as a reading of the gauge, operability of the display 900, or performance of the display 900. For example, the segmented region 903 may transition from a first area to a second area, where the second area is less than the first area. The reduction in area may further emphasize a condition of the display 900, such as a reading outside of a normal range, which may allow a user to readily perceive the condition. This may cause the user to zone in on the condition, which may be expedited due to the reduction in area. Because of the reduction in area, the user may perceive less extraneous information, and as such, readily zone in on the condition.

Compared to FIG. 9A, FIG. 9B shows the segmented region 903 in a new location. The segmented region 903 may track a pointer 905 of the display 900. Thus, as the pointer 905 moves, the segmented region 903 may move, too. As the pointer 905 moves, the segmented region 903 may move such that the pointer 905 divides the segmented region 903. The movement of the segmented region 903 and the pointer 905 may be done in a synchronized fashion. As an alternative, the segmented region 903 may move at a different pace of the pointer 905, so long as the pointer 905 is within the segmented region 903. In either, a user may readily perceive the segmented region 903. This may allow the user to perceive less extraneous information, such as information that appears in the surrounding region 904. Thus, the user may readily zone in on information in the segmented region 903.

In the synchronized fashion, the user may expect the pointer 905 to be at a certain location in the segmented region 903. For example, the pointer 905 may divide a first portion of the segmented region 903 from a second portion of the segmented region 903. The division may be even and constant, and as such an area of the first portion may equal an area of the second portion. As an alternative, the division may be that the area of the first portion is greater than the area of the second portion. A proportion for the area of the first portion to the area of the second portion may be constant. As another alternative, the area of the first portion may be less than the area of the second portion. A proportion for the area of the first portion to the area of the second portion may be constant. The division may be constant, which may allow the user to instinctively detect the pointer in the segmented region 903. And as such, the constant division may allow the user to readily perceive information associated with the pointer 905.

As an alternative, the display 900 may utilize a tiered approach for emphasizing levels of information. This may occur when the segmented region 903 moves at a different pace than the pointer 905, so long as the pointer 905 is nevertheless within the segmented region 903. The pointer 905 may move independently of the segmented region 903. Similarly; the segmented region 903 may move independently of the pointer 905. Thus, the segmented region 903 and the pointer 905 may move in an asynchronized fashion (i.e., not synchronized). The movement of the segmented region 903 may allow the user to readily perceive a first-level of critical information, and the movement of the pointer 905 inside of the segmented region 903 may allow the user to readily perceive a second-level of critical information.

As an example, the display 900 may show a set of information at a first level. Inside of the set of information, the display 900 may emphasize a subset of information, which may be via the segmented region 903. This may be at a second level, which may be lower than the first level. Inside of the subset of information, the display 900 may further emphasize information associated with the pointer 905. This may be at a third-level, which may be lower than the second level. In the first level, the set may include critical information and extraneous information. The second level, through the subset of information, may convey a first degree of critical information to a user. The third level, via information associated with the pointer 905, may convey a second degree of critical information to the user. The first degree may be at a macro-level of critical information, whereas the second degree may be at a micro-level of critical information.

As an example, when the display 900 is a fuel gauge, the fuel gauge may have indicia for empty, quarter-of-a-tank, half-of-a-tank, three-quarters-of-a-tank, and full. The indicia may be positioned over a line segment. The line segment may have empty and full indicia as the end-points. The pointer 905 may travel along the line segment, depending on fuel level of the vehicle. At the first level of information for the display 900, a user may see all of the indicia, the entire line segment, and the pointer 905. This may include critical information and extraneous information. For example, if the vehicle only has between a quarter-of-a-tank of fuel and a half-of-a-tank of fuel, information outside of that range may be extraneous. As such, at a second-level of information for the display 900, the display 900 may position the segmented region 903 to emphasize the quarter-of-a-tank to half-of-a-tank indicia. Thus, the display 900 may deemphasize the surrounding region 904, such as regions for half-of-a-tank to full and empty to quarter-of-a-tank. In doing so, the user may readily perceive, via the segmented region 903, a macro-reading of fuel in the vehicle. At a third-level of information for the display 900, the display 900 may emphasize the pointer 905 inside of the segmented region 903. Inside of the segmented region 903, the pointer 905 may move independently of the segmented region 903. The segmented region 903 may remain fixed between the quarter-of-a-tank and half-of-a-tank, while the pointer 905 moves within the segmented region 903. Compared to the segmented region 903, through a reading associated with the pointer 905, a user may readily perceive a micro-reading of fuel in the vehicle.

The pointer 905 may be a graphical pointer or a mechanical pointer. The graphical pointer may be used with the graphical gauge. The mechanical pointer may be used with the analog gauge. As an alternative, the gauge may be a hybrid gauge, which includes a combination of a graphical gauge with a mechanical pointer.

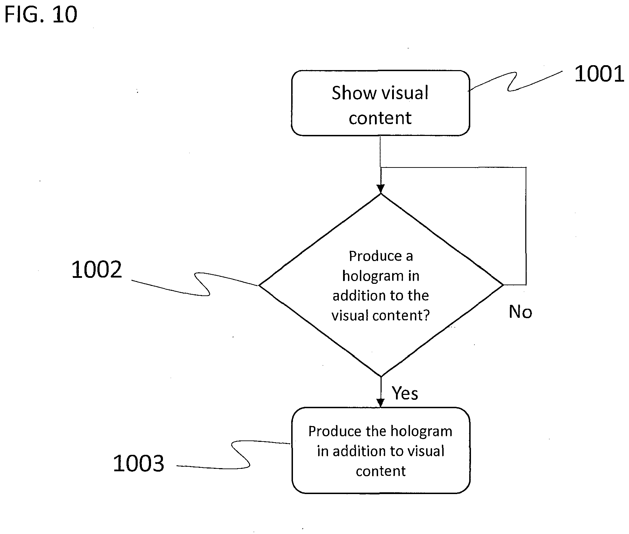

In accordance with one or more embodiments herein, FIG. 10 illustrates a method for producing a hologram. In step 1001, a display shows visual content. In step 1002, the method decides whether to produce a hologram in addition to the visual content. In step 1003, based on a decision to produce the hologram in addition to the visual content, the method actually produces the hologram in addition to the visual content.

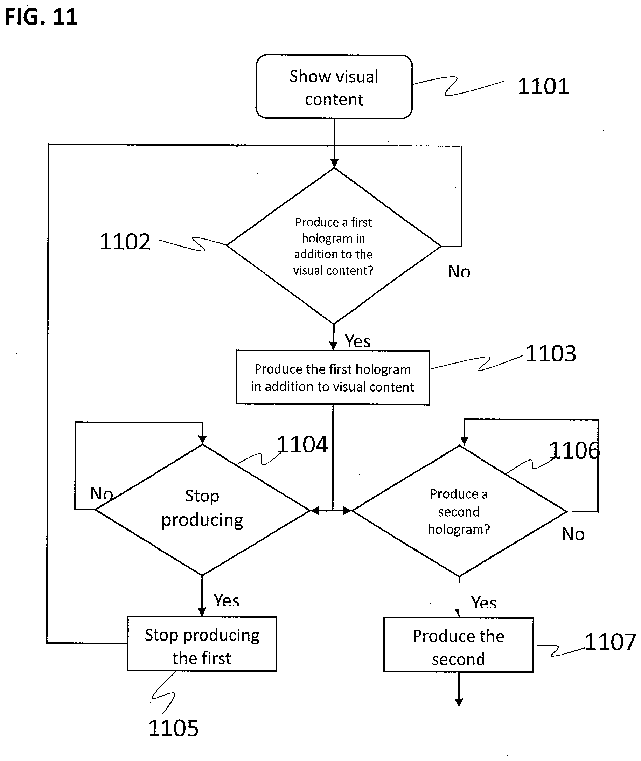

In accordance with one or more embodiments herein, FIG. 11 illustrates a method for producing a first hologram and a second hologram. In step 1101, a display shows visual content. In step 1102, the method decides whether to produces first hologram in addition to the visual content. In step 1103, based on a decision to produce the first hologram in addition to the visual content, the method actually produces the first hologram.

In step 1104, the method determines whether to stop producing the first hologram. Based on a decision to stop, in step 1105, the method actually stops producing the first hologram. Stopping the production of the first hologram in 1105 then leads the method back to the decision step 1102.

In step 1106, the method determines whether to produce a second hologram. Based on a decision to produce the second hologram, the method actually produces the second hologram in step 1107. The decision steps of 1104 and 1106 may be independent of one another. Alternatively, the method may reposition the decision steps such that either step 1104 depends on step 1106 or step 1106 depends on step 1104.

While exemplary embodiments are described above, it is not intended that these embodiments describe all possible forms of the invention. Rather, the words used in the specification are words of description rather than limitation, and it is understood that various changes may be made without departing from the scope of protection as defined by the claims interpreted on the basis of disclosure provided with the present application. Additionally, the features of various implementing embodiments may be combined to form further embodiments of the invention.

## Claims

1. A display (100) for a vehicle configured for showing visual content and producing a hologram, in addition to the visual content, the display (100) comprising:
a backlight unit (101);
an illumination frame (102) defining an opening and positioned in front of and encircling the backlight unit (101) in the opening and including one or more light elements positioned about a periphery of the illumination frame (102); and
a holographic layer (104) positioned in the opening of the illumination frame (102), wherein the one or more light elements is/are configured to emit light through the holographic layer (104) to produce the hologram.

2. The display (100) of claim 1, further comprising a controller electrically connected to the one or more light elements for selectively activating the one or more light elements to produce the hologram.

3. The display (100) of claim 1 or 2, wherein the holographic layer (104) is a plurality of holographic layers (104), each holographic layer of the plurality of holographic layers (104) being positioned in front of the backlight unit (101).

4. The display (100) of claim 3, wherein the hologram includes a plurality of holograms, the plurality of holograms includes a first hologram and a second hologram, and
wherein the plurality of holographic layers (104) includes a first holographic layer having a first interference pattern for producing the first hologram and a second holographic layer having a second interference pattern for producing the second hologram.

5. The display (100) of claim 2, 3 or 4, wherein the one or more light elements is a plurality of light elements, each light element in the plurality of light elements is electrically connected to the controller, and
the controller is configured to selectively activate one or more of the light elements in the plurality of light elements to produce the hologram.

6. The display (100) of claim 5, wherein the plurality of light elements includes a first light element for producing a first hologram of the hologram and a second light element for producing a second hologram of the hologram.

7. The display (100) of claim 5, wherein the plurality of light elements includes a first light element and a second light element, the first light element and the second light element are configured to emit light in directions perpendicular to the holographic layer (104).

8. The display (100) of claim 5, wherein the plurality of light elements includes a first light element and a second light element, the first light element is positioned at a first angle to the holographic layer (104) to emit light at a first non-perpendicular direction through the holographic layer (104), and the second light element is positioned at a second angle to the holographic layer (104) to emit light at a second non-perpendicular direction through the holographic layer (104).

9. The display (100) of one of claims 1-8, wherein the display (100) includes a graphical user interface (GUI) to show the visual content, the visual content being at least one of a two-dimensional computer graphic or a three-dimensional computer graphic, and
wherein the display (100) is configured to produce the hologram in response to the visual content on the GUI.

10. The display (100) of one of claims 1-9, wherein the display (100) includes an instrument cluster having at least one gauge, and
wherein the display (100) is configured to produce the hologram in response to a reading associated with the at least one gauge.

11. The display (100) of claim 10, wherein the instrument cluster is a digital instrument cluster, and the at least one gauge is at least one graphical gauge, wherein the backlight unit (101) includes a GUI for at least showing the at least one graphical gauge as the visual content, and
the display (100) is configured to generate the hologram in response to a reading associated with the at least one graphical gauge.

12. The display (100) of one of claims 1-11, wherein the one or more light elements is configured to switch from emitting light in a first wavelength to emitting light in a second wavelength to cause a change in color for the hologram.

13. The display (100) of one of claims 1-12, further comprising a cover layer (106) positioned in front of the holographic layer (104) and an intermediate layer (105) positioned between and in contact with the cover layer (106) and the holographic layer (104).

14. The display (100) of one of claims 1-13, wherein the illumination frame (102) includes a light guide configured to direct light from the one or more light elements through the holographic layer (104) to produce the hologram.

15. The display (100) of one of claims 1-14, further comprising an optical element for separating bandwidths of light from the one or more light elements to produce a first hologram of the hologram in a first color and a second hologram of the hologram in a second color.

## Patentansprüche

1. Anzeige (100) für ein Fahrzeug, die zum Zeigen eines visuellen Inhaltes und Erzeugen eines Hologrammes zusätzlich zu dem visuellen Inhalt konfiguriert ist, wobei die Anzeige (100) Folgendes umfasst:
eine Hintergrundbeleuchtungseinheit (101);
einen Beleuchtungsrahmen (102), der eine Öffnung definiert und vor der Hintergrundbeleuchtungseinheit (101) in der Öffnung positioniert ist und diese umgibt und eine oder mehrere Leuchtenelemente beinhaltet, die um einen Umfang des Beleuchtungsrahmens (102) positioniert sind; und
eine holographische Schicht (104), die in der Öffnung des Beleuchtungsrahmens (102) positioniert ist, wobei das eine oder die mehreren Leuchtenelemente konfiguriert sind, um Licht durch die holographische Schicht (104) zu emittieren, um das Hologramm zu erzeugen.

2. Anzeige (100) nach Anspruch 1, ferner umfassend eine Steuerung, die zum selektiven Aktivieren des einen Leuchtenelements oder der mehreren Leuchtenelemente, um das Hologramm zu erzeugen, elektrisch mit dem einen oder den mehreren Leuchtenelementen verbunden ist.

3. Anzeige (100) nach Anspruch 1 oder 2, wobei es sich bei der holographischen Schicht (104) um eine Vielzahl von holographischen Schichten (104) handelt, wobei jede holographische Schicht der Vielzahl von holographischen Schichten (104) vor der Hintergrundbeleuchtungseinheit (101) positioniert ist.

4. Anzeige (100) nach Anspruch 3, wobei das Hologramm eine Vielzahl von Hologrammen beinhaltet, wobei die Vielzahl von Hologrammen ein erstes Hologramm und ein zweites Hologramm beinhaltet, und
wobei die Vielzahl von holographischen Schichten (104) eine erste holographische Schicht, die ein erstes Interferenzmuster zum Erzeugen des ersten Hologramms aufweist, und eine zweite holographische Schicht beinhaltet, die ein zweites Interferenzmuster zum Erzeugen des zweiten Hologramms aufweist.

5. Anzeige (100) nach Anspruch 2, 3 oder 4, wobei es sich bei dem einen oder den mehreren Leuchtenelementen um eine Vielzahl von Leuchtenelementen handelt, wobei jedes Leuchtenelement in der Vielzahl von Leuchtenelementen elektrisch mit der Steuerung verbunden ist, und
die Steuerung konfiguriert ist, um eines oder mehrere der Leuchtenelemente in der Vielzahl von Leuchtenelementen selektiv zu aktivieren, um das Hologramm zu erzeugen.

6. Anzeige (100) nach Anspruch 5, wobei die Vielzahl von Leuchtenelementen ein erstes Leuchtenelement zum Erzeugen eines ersten Hologramms des Hologramms und ein zweites Leuchtenelement zum Erzeugen eines zweiten Hologramms des Hologramms beinhaltet.

7. Anzeige (100) nach Anspruch 5, wobei die Vielzahl von Leuchtenelementen ein erstes Leuchtenelement und ein zweites Leuchtenelement beinhaltet, wobei das erste Leuchtenelement und das zweite Leuchtenelement konfiguriert sind, um Licht in zu der holographischen Schicht (104) senkrechten Richtungen zu emittieren.

8. Anzeige (100) nach Anspruch 5, wobei die Vielzahl von Leuchtenelementen ein erstes Leuchtenelement und ein zweites Leuchtenelement beinhaltet, wobei das erste Leuchtenelement in einem ersten Winkel zu der holographischen Schicht (104) positioniert ist, um Licht in einer ersten nicht senkrechten Richtung durch die holographische Schicht (104) zu emittieren, und das zweite Leuchtenelement in einem zweiten Winkel zu der holographischen Schicht (104) positioniert ist, um Licht in einer zweiten nicht senkrechten Richtung durch die holographische Schicht (104) zu emittieren.

9. Anzeige (100) nach einem der Ansprüche 1-8, wobei die Anzeige (100) eine graphische Benutzerschnittstelle (GUI) beinhaltet, um den visuellen Inhalt zu zeigen, wobei es sich bei dem visuellen Inhalt um zumindest eines von einer zweidimensionalen Computergraphik oder einer dreidimensionalen Cumputergraphik handelt, und
wobei die Anzeige (100) konfiguriert ist, um das Hologramm als Reaktion auf den visuellen Inhalt auf der GUI zu erzeugen.

10. Anzeige (100) nach einem der Ansprüche 1-9, wobei die Anzeige (100) ein Kombiinstrument beinhaltet, das zumindest ein Messgerät aufweist, und
wobei die Anzeige (100) konfiguriert ist, um das Hologramm als Reaktion auf einen Messwert zu erzeugen, der dem zumindest einen Messgerät zugeordnet ist.

11. Anzeige (100) nach Anspruch 10, wobei es sich bei dem Kombiinstrument um ein digitales Kombiinstrument handelt und es sich bei dem zumindest einen Messgerät um zumindest ein graphisches Messgerät handelt, wobei die Hintergrundbeleuchtungseinheit (101) eine GUI zumindest zum Zeigen des zumindest einen graphischen Messgeräts als den visuellen Inhalt beinhaltet, und
die Anzeige (100) konfiguriert ist, um das Hologramm als Reaktion auf einen Messwert zu generieren, der dem zumindest einen graphischen Messgerät zugeordnet ist.

12. Anzeige (100) nach einem der Ansprüche 1-11, wobei das eine oder die mehreren Leuchtenelemente konfiguriert sind, um von Emittieren von Licht auf einer ersten Wellenlänge in Emittieren von Licht auf einer zweiten Wellenlänge umzuschalten, um eine Farbänderung für das Hologramm hervorzurufen.

13. Anzeige (100) nach einem der Ansprüche 1-12, ferner umfassend eine Deckschicht (106), die vor der holographischen Schicht (104) positioniert ist, und eine Zwischenschicht (105), die zwischen und in Berührung mit der Deckschicht (106) und der holographischen Schicht (104) positioniert ist.

14. Anzeige (100) nach einem der Ansprüche 1-13, wobei der Beleuchtungsrahmen (102) eine Lichtführung beinhaltet, die konfiguriert ist, um Licht von dem einen oder den mehreren Leuchtenelementen durch die holographische Schicht (104) zu führen, um das Hologramm zu erzeugen.

15. Anzeige (100) nach einem der Ansprüche 1-14, ferner umfassend ein optisches Element zum Trennen von Bandbreiten von Licht von dem einen oder den mehreren Leuchtenelementen, um ein erstes Hologramm des Hologramms in einer ersten Farbe und ein zweites Hologramm des Hologramms in einer zweiten Farbe zu erzeugen.

## Revendications

1. Affichage (100) pour véhicule conçu pour montrer un contenu visuel et produire un hologramme, en plus du contenu visuel, l'affichage (100) comprenant:
une unité de rétroéclairage (101);
un cadre d'éclairage (102) définissant une ouverture et positionné devant et encerclant l'unité de rétroéclairage (101) dans l'ouverture et comportant un ou plusieurs éléments lumineux positionnés autour d'une périphérie du cadre d'éclairage (102); et
une couche holographique (104) positionnée dans l'ouverture du cadre d'éclairage (102), dans lequel les un ou plusieurs éléments lumineux est/sont conçus pour émettre de la lumière à travers la couche holographique (104) pour produire l'hologramme.

2. Affichage (100) selon la revendication 1, comprenant en outre un dispositif de commande connecté électriquement aux un ou plusieurs éléments lumineux pour activer sélectivement les un ou plusieurs éléments lumineux pour produire l'hologramme.

3. Affichage (100) selon la revendication 1 ou 2, dans lequel la couche holographique (104) est une pluralité de couches holographiques (104), chaque couche holographique de la pluralité de couches holographiques (104) étant positionnée devant l'unité de rétroéclairage (101).

4. Affichage (100) selon la revendication 3, dans lequel l'hologramme comporte une pluralité d'hologrammes, la pluralité d'hologrammes comporte un premier hologramme et un second hologramme, et
dans lequel la pluralité de couches holographiques (104) comporte une première couche holographique ayant un premier motif d'interférence pour produire le premier hologramme et une seconde couche holographique ayant un second motif d'interférence pour produire le second hologramme.

5. Affichage (100) selon la revendication 2, 3 ou 4, dans lequel les un ou plusieurs éléments lumineux sont une pluralité d'éléments lumineux, chaque élément lumineux dans la pluralité d'éléments lumineux est connecté électriquement au dispositif de commande, et
le dispositif de commande est conçu pour activer sélectivement l'un ou plusieurs des éléments lumineux dans la pluralité d'éléments lumineux pour produire l'hologramme.

6. Affichage (100) selon la revendication 5, dans lequel la pluralité d'éléments lumineux comporte un premier élément lumineux pour produire un premier hologramme de l'hologramme et un second élément lumineux pour produire un second hologramme de l'hologramme.

7. Affichage (100) selon la revendication 5, dans lequel la pluralité d'éléments lumineux comporte un premier élément lumineux et un second élément lumineux, le premier élément lumineux et le second élément lumineux sont conçus pour émettre de la lumière dans des directions perpendiculaires à la couche holographique (104).

8. Affichage (100) selon la revendication 5, dans lequel la pluralité d'éléments lumineux comporte un premier élément lumineux et un second élément lumineux, le premier élément lumineux est positionné à un premier angle par rapport à la couche holographique (104) pour émettre de la lumière dans une premier direction non perpendiculaire à travers la couche holographique (104), et le second élément lumineux est positionné à un second angle par rapport à la couche holographique (104) pour émettre de la lumière dans une seconde direction non perpendiculaire à travers la couche holographique (104) .

9. Affichage (100) selon l'une des revendications 1 à 8, dans lequel l'affichage (100) comporte une interface utilisateur graphique (GUI) pour montrer le contenu visuel, le contenu visuel étant au moins l'un d'un graphique informatique bidimensionnel ou d'un graphique informatique tridimensionnel, et
dans lequel l'affichage (100) est conçu pour produire l'hologramme en réponse au contenu visuel sur la GUI.

10. Affichage (100) selon l'une des revendications 1 à 9, dans lequel l'affichage (100) comporte un groupe d'instruments ayant au moins une jauge, et
dans lequel l'affichage (100) est conçu pour produire l'hologramme en réponse à une lecture associée à l'au moins une jauge.

11. Affichage (100) selon la revendication 10, dans lequel le groupe d'instruments est un groupe d'instruments numériques, et l'au moins une jauge est au moins une jauge graphique, dans lequel l'unité de rétroéclairage (101) comporte une GUI pour au moins montrer l'au moins une jauge graphique comme contenu visuel, et
l'affichage (100) est conçu pour générer l'hologramme en réponse à une lecture associée à l'au moins une jauge graphique.

12. Affichage (100) selon l'une des revendications 1 à 11, dans lequel les un ou plusieurs éléments lumineux sont conçus pour passer de l'émission de lumière dans une première longueur d'onde à l'émission de lumière dans une seconde longueur d'onde pour provoquer un changement de couleur de l'hologramme.

13. Affichage (100) selon l'une des revendications 1 à 12, comprenant en outre une couche de couverture (106) positionnée devant la couche holographique (104) et une couche intermédiaire (105) positionnée entre la couche de couverture (106) et la couche holographique (104) et en contact avec celles-ci.

14. Affichage (100) selon l'une des revendications 1 à 13, dans lequel le cadre d'éclairage (102) comporte un guide de lumière conçu pour diriger la lumière des un ou plusieurs éléments lumineux à travers la couche holographique (104) pour produire l'hologramme.

15. Affichage (100) selon l'une des revendications 1 à 14, comprenant en outre un élément optique pour séparer les bandes passantes de lumière des un ou plusieurs éléments lumineux pour produire un premier hologramme de l'hologramme dans une première couleur et un second hologramme de l'hologramme dans une seconde couleur.
